# EUROPÄISCHE PATENTANMELDUNG

(11) **EP 3 588 863 A1**
(43) Veröffentlichungstag der Anmeldung: **01.01.2020**
(21) Anmeldenummer: 18180683.7
(22) Anmeldetag: 29.06.2018
(51) Int. Cl.: H04L 12/26

(54) **VERFAHREN ZUM BETRIEB EINES FUNK-KOMMUNIKATIONSSYSTEMS FÜR EIN INDUSTRIELLES AUTOMATISIERUNGSSYSTEM UND FUNK-KOMMUNIKATIONSGERÄT**

(71) Anmelder: Siemens Aktiengesellschaft, 80333 München (DE)
(72) Erfinder: Müller, Jörg, 76351 Linkenheim (DE)

(57) **Zusammenfassung**

Die Erfindung betrifft ein Verfahren zum Betrieb eines FunkKommunikationssystems mit zumindest einem ersten (201, 202) und einem zweiten Funk-Kommunikationsgerät (203, 204). Zumindest ein Antennensystem des ersten Funk-Kommunikationsgeräts weist eine hinsichtlich ihrer Richtung steuerbare Sende- bzw. Empfangscharakteristik auf. Anhand eines ermittelten Empfangswinkel-Signalstärke-Verlaufs ermittelt das erste Funk-Kommunikationsgerät (201, 202) einen Richtungsvektor zum zweiten Funk-Kommunikationsgerät (203, 204) und steuert dementsprechend die Richtung der Sende- bzw. Empfangscharakteristik (215, 225) seines Antennensystems (214, 224). Vorzugsweise wird eine Datenübermittlung zwischen dem ersten Funk-Kommunikationsgerät und dem zweiten Funk-Kommunikationsgerät eingestellt, wenn ein Absolutwert des für das erste bzw. zweite Funk-Kommunikationsgerät ermittelten Empfangswinkel-Signalstärke-Verlaufs unter einen vorgebbaren Schwellwert fällt. Auch für die Richtungsvektoren kann ein zulässiger Winkelbereich vorgegeben werden, außerhalb dessen die Datenübermittlung eingestellt wird.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, die üblicherweise innerhalb eines vorgegebenen Zyklus deterministisch zu übermitteln sind.

In EP 2 093 122 B1 ist ein Verfahren zur Kopplung von zwei Zugwagen untereinander beschrieben, wobei die Kopplung zum Datenaustausch zwischen den beiden Zugwagen dient. In jedem der beiden Zugwagen sind Einrichtungen zum Senden und Empfangen sowie zum Verarbeiten von Daten vorgesehen. Die Datenübertragung zwischen den beiden gekoppelten Zugwagen erfolgt drahtlos und beim Senden ausgerichtet. Dabei werden die Strahlrichtungen räumlich so gewählt, dass die gleichzeitige Verbindung nur in einer bestimmten räumlichen Position der paarweise zu koppelnden Zugwagen und deren Einrichtungen zum Senden und Empfangen von Daten besteht.

Aus US 8 238 832 B1 ist ein Strahlformungsverfahren für ein Antennensystem eines Funk-Kommunikationsgeräts bekannt, bei dem das Funk-Kommunikationsgerät für Empfangssignale, die entsprechend unterschiedlicher Funk-Übertragungsprotokolle übermittelt werden, jeweils Empfangswinkel zu ermitteln. Das Antennensystem des Funk-Kommunikationsgeräts weist eine hinsichtlich ihrer Richtung steuerbare Sende- bzw. Empfangscharakteristik auf. In Abhängigkeit von einem ausgewählten Funk-Übertragungsprotokoll und dem jeweils ermittelten Empfangswinkel steuert das Funk-Kommunikationsgerät die Richtung der Sende- bzw. Empfangscharakteristik seines Antennensystems. Auf diese Weise können Interferenzen zwischen Funk-Kommunikationssystemen mit unterschiedlichen Funk-Übertragungsprotokollen vermieden werden.

Der vorliegenden Erfindung liegt die Aufgabe zugrunde, ein Verfahren zum Betrieb eines Funk-Kommunikationssystems für ein industrielles Automatisierungssystem zu schaffen, das eine selektive und genaue Kopplung von in einer Kommunikationsbeziehung stehenden Funk-Kommunikationsgeräten ermöglicht und Beeinträchtigungen anderer Teilnehmer weitestgehend vermeidet, sowie ein geeignetes Funk-Kommunikationsgerät anzugeben.

Diese Aufgabe wird erfindungsgemäß durch ein Verfahren mit den in Anspruch 1 angegebenen Merkmalen und durch ein Funk-Kommunikationsgerät mit den in Anspruch 14 angegebenen Merkmalen gelöst. Vorteilhafte Weiterbildungen der vorliegenden Erfindung sind in den abhängigen Ansprüchen angegeben.

Das erfindungsgemäße Verfahren ist zum Betrieb eines Funk-Kommunikationssystems vorgesehen, das zumindest ein erstes und ein zweites als Funk-Basisstation bzw. als Funk-Teilnehmerstation betreibbares Funk-Kommunikationsgerät umfasst, die jeweils zumindest eine Funk-Transceivereinheit und ein dieser zugeordnetes Antennensystem umfassen. Zumindest das Antennensystem des ersten Funk-Kommunikationsgeräts weist eine hinsichtlich ihrer Richtung steuerbare Sende- bzw. Empfangscharakteristik auf. Ein solches Antennensystem kann beispielsweise auf Basis einer Array-Antenne realisiert werden und Beamforming ermöglichen. Außerdem ermittelt zumindest das erste Funk-Kommunikationsgerät zu vorgebbaren Zeitpunkten bzw. bei Eintritt vorgebbarer Ereignisse für vom zweiten Funk-Kommunikationsgerät empfangene Funk-Signale mittels der steuerbaren Richtung der Empfangscharakteristik seines Antennensystems einen Empfangswinkel-Signalstärke-Verlauf.

Erfindungsgemäß ermittelt das erste Funk-Kommunikationsgerät anhand des für das zweite Funk-Kommunikationsgerät ermittelten Empfangswinkel-Signalstärke-Verlaufs einen Richtungsvektor zum zweiten Funk-Kommunikationsgerät. Entsprechend dem für das zweite Funk-Kommunikationsgerät ermittelten Richtungsvektor steuert das erste Funk-Kommunikationsgerät die Richtung der Sende- bzw. Empfangscharakteristik seines Antennensystems.

Mit dem erfindungsgemäßen Verfahren kann verhindert werden, dass Funk-Stationen, die zueinander keine Verbindungen aufbauen bzw. sich nicht gegenseitig stören sollen, innerhalb eines Funk-Kommunikationssystems aufgrund passender Kommunikationsparameter (z.B. SSID) miteinander kommunizieren können. Vielmehr können sich als Kommunikationspartner für einander bestimmte Funk-Stationen auf Basis des ermittelten Empfangswinkel-Signalstärke-Verlaufs gezielt per Beamforming anpeilen und sind somit für andere Funk-Stationen außerhalb ihres Funk-Feldes quasi nicht wahrnehmbar. Zudem ist eine Implementierung des erfindungsgemäßen Verfahrens in bestehenden Funk-Stationen recht einfach realisierbar. Vorzugsweise erfolgt eine Datenübermittlung zwischen dem ersten Funk-Kommunikationsgerät und dem zweiten Funk-Kommunikationsgerät entsprechend IEEE-Standard 802.11ad.

Entsprechend einer bevorzugten Ausgestaltung des erfindungsgemäßen Verfahrens ermittelt das erste Funk-Kommunikationsgerät anhand einer ermittelten Stärke der vom zweiten Funk-Kommunikationsgerät empfangenen Funk-Signale bzw. anhand einer Signallaufzeitmessung einen Abstand zum zweiten Funk-Kommunikationsgerät. Dabei steuert das erste Funk-Kommunikationsgerät seine Sendeleistung entsprechend dem für das zweite Funk-Kommunikationsgerät ermittelten Abstand. Auf diese Weise kann ein noch selektiveres Beamforming realisiert werden. Vorteilhafterweise leitet das erste Funk-Kommunikationsgerät den Richtungsvektor zum zweiten Funk-Kommunikationsgerät aus einem Maximum des für das zweite Funk-Kommunikationsgerät ermittelten Empfangswinkel-Signalstärke-Verlaufs ab. Somit kann der Richtungsvektor einfach und grundsätzlich ohne zusätzliche Hardware ermittelt werden.

Darüber hinaus weist vorzugsweise auch das Antennensystem des zweiten Funk-Kommunikationsgeräts eine hinsichtlich ihrer Richtung steuerbare Sende- bzw. Empfangscharakteristik auf. In diesem Fall ermittelt das zweite Funk-Kommunikationsgerät analog zu obigen Ausführungen zu vorgebbaren Zeitpunkten bzw. bei Eintritt vorgebbarer Ereignisse für vom ersten Funk-Kommunikationsgerät empfangene Funk-Signale mittels der steuerbaren Richtung der Empfangscharakteristik seines Antennensystems einen Empfangswinkel-Signalstärke-Verlauf. Anhand des für das erste Funk-Kommunikationsgerät ermittelten Empfangswinkel-Signalstärke-Verlaufs ermittelt das zweite Funk-Kommunikationsgerät einen Richtungsvektor zum ersten Funk-Kommunikationsgerät und steuert die Richtung der Sende- bzw. Empfangscharakteristik seines Antennensystems entsprechend dem für das erste Funk-Kommunikationsgerät ermittelten Richtungsvektor. Somit setzen beide Funk-Kommunikationsgeräte ein selektives Beamforming um, so dass eine Störung anderer Funk-Stationen weiter vermindert wird.

Entsprechend einer weiteren vorteilhaften Ausgestaltung der vorliegenden Erfindung ermittelt das zweite Funk-Kommunikationsgerät anhand einer ermittelten Stärke der vom ersten Funk-Kommunikationsgerät empfangenen Funk-Signale bzw. anhand einer Signallaufzeitmessung einen Abstand zum ersten Funk-Kommunikationsgerät und steuert seine Sendeleistung entsprechend dem für das erste Funk-Kommunikationsgerät ermittelten Abstand. Dabei kann das zweite Funk-Kommunikationsgerät den Richtungsvektor zum ersten Funk-Kommunikationsgerät aus einem Maximum des für das erste Funk-Kommunikationsgerät ermittelten Empfangswinkel-Signalstärke-Verlaufs ableiten. Zusätzlich oder alternativ zu einer Ortung, die auf einem Empfangswinkel-Signalstärke-Verlauf basiert, kann die Ortung des zweiten Funk-Kommunikationsgeräts durch das erste Funk-Kommunikationsgerät bzw. die Ortung des ersten Funk-Kommunikationsgeräts durch das zweite Funk-Kommunikationsgerät mittels eines Ultra-Weitband-Ortungssystems erfolgen.

Das erste Funk-Kommunikationsgerät kann beispielsweise als Funk-Basisstation an einer konstanten Position betrieben werden, während das zweite Funk-Kommunikationsgerät als Funk-Teilnehmerstation an einer veränderbaren Position betrieben wird. In diesem Fall ermittelt das erste Funk-Kommunikationsgerät vorzugsweise fortlaufend die Position des zweiten Funk-Kommunikationsgeräts. Anhand der Position des ersten Funk-Kommunikationsgeräts und der Position des zweiten Funk-Kommunikationsgeräts kann ein Richtungsvektor vom zweiten Funk-Kommunikationsgerät zum ersten Funk-Kommunikationsgerät ermittelt werden, entsprechend dem das zweite Funk-Kommunikationsgerät die Richtung der Sende- bzw. Empfangscharakteristik seines Antennensystems steuert. Das zweite Funk-Kommunikationsgerät muss also nicht notwendigerweise selber eine Empfangswinkel-Signalstärke-Analyse zur Ermittlung des Richtungsvektors für eine Steuerung seines Antennensystems durchführen. Insbesondere kann das erste Funk-Kommunikationsgerät hierzu eine Information über seine eigene Position sowie über die Position des zweiten Funk-Kommunikationsgeräts oder eine Information über den Richtungsvektor vom zweiten Funk-Kommunikationsgerät zum ersten Funk-Kommunikationsgerät an das zweite Funk-Kommunikationsgerät übermitteln.

Entsprechend einer weiteren vorteilhaften Ausgestaltung des erfindungsgemäßen Verfahrens wird eine Datenübermittlung zwischen dem ersten Funk-Kommunikationsgerät und dem zweiten Funk-Kommunikationsgerät eingestellt, wenn ein Absolutwert des für das erste bzw. zweite Funk-Kommunikationsgerät ermittelten Empfangswinkel-Signalstärke-Verlaufs unter einen vorgebbaren Schwellwert fällt. Auch für die Richtungsvektoren kann ein zulässiger Winkelbereich vorgegeben werden, außerhalb dessen die Datenübermittlung eingestellt wird.

Vorzugsweise wird nur dann eine Funk-Verbindung zwischen dem ersten Funk-Kommunikationsgerät und dem zweiten Funk-Kommunikationsgerät aufgebaut wird, wenn beide Funk-Kommunikationsgeräte demselben Funk-Netz zugeordnet sind. Dabei kann ein Zugriff auf ein Funk-Netz durch eine Funk-Teilnehmerstation insbesondere anhand einer dem Funk-Netz zugeordneten Netz-Kennung, z.B. SSID, und nach einer Autorisierung bei Vorliegen gültiger Netz-Zugangsinformationen erfolgen.

Das erfindungsgemäße Funk-Kommunikationsgerät ist insbesondere zur Durchführung eines Verfahrens entsprechend vorangehenden Ausführungen geeignet und umfasst zumindest eine Funk-Transceivereinheit und ein diesem zugeordnetes Antennensystem, das eine hinsichtlich ihrer Richtung steuerbare Sende- bzw. Empfangscharakteristik aufweist. Das Funk-Kommunikationsgerät ist dafür ausgestaltet und eingerichtet, zu vorgebbaren Zeitpunkten bzw. bei Eintritt vorgebbarer Ereignisse für von einem weiteren Funk-Kommunikationsgerät empfangene Funk-Signale mittels der steuerbaren Richtung der Empfangscharakteristik seines Antennensystems einen Empfangswinkel-Signalstärke-Verlauf zu ermitteln. Außerdem ist das Funk-Kommunikationsgerät dafür ausgestaltet und eingerichtet, anhand des für das weitere Funk-Kommunikationsgerät ermittelten Empfangswinkel-Signalstärke-Verlaufs einen Richtungsvektor zum weiteren Funk-Kommunikationsgerät zu ermitteln und die Richtung der Sende- bzw. Empfangscharakteristik seines Antennensystems entsprechend dem für das weitere Funk-Kommunikationsgerät ermittelten Richtungsvektor zu steuern.

Vorzugsweise ist das Funk-Kommunikationsgerät dafür ausgestaltet und eingerichtet, anhand einer ermittelten Stärke der vom weiteren Funk-Kommunikationsgerät empfangenen Funk-Signale bzw. anhand einer Signallaufzeitmessung einen Abstand zum weiteren Funk-Kommunikationsgerät zu ermitteln und seine Sendeleistung entsprechend dem für das weitere Funk-Kommunikationsgerät ermittelten Abstand zu steuern. Entsprechend einer weiteren vorteilhaften Ausgestaltung ist das Funk-Kommunikationsgerät dafür ausgestaltet und eingerichtet, den Richtungsvektor zum weiteren Funk-Kommunikationsgerät aus einem Maximum des für das weitere Funk-Kommunikationsgerät ermittelten Empfangswinkel-Signalstärke-Verlaufs abzuleiten.

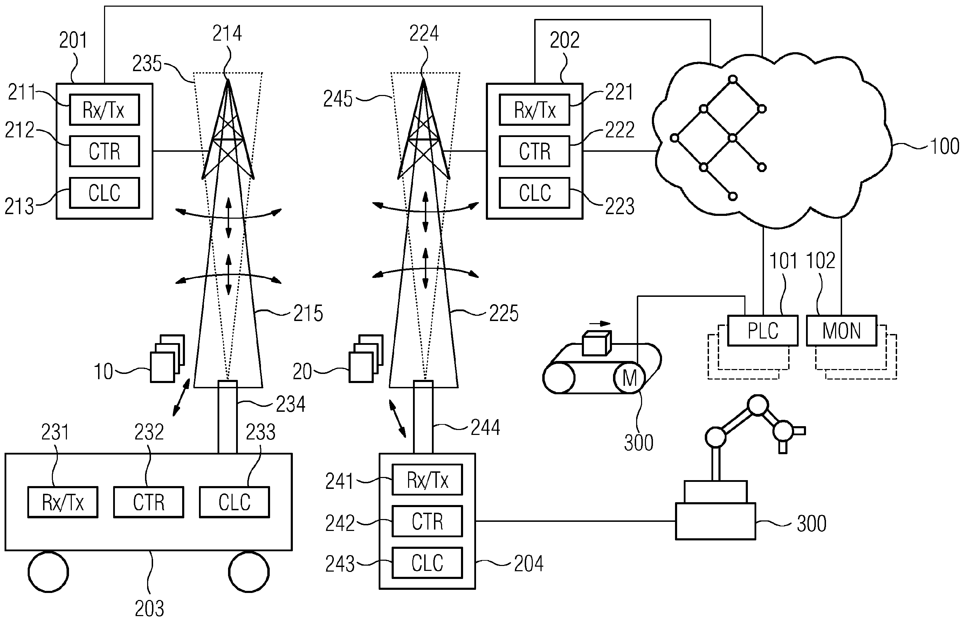

Die vorliegende Erfindung wird an einem Ausführungsbeispiel anhand der Zeichnung näher erläutert. Es zeigt die

Die vorliegende Erfindung wird nachfolgend an einem Ausführungsbeispiel anhand der Zeichnung näher erläutert. Es zeigt die
- Figur: ein industrielles Automatisierungssystem mit einem Kommunikationsnetz und einem an dieses angeschlossenen Funk-Kommunikationssystem.

Das in der Figur dargestellte industrielle Automatisierungssystem umfasst ein Kommunikationsnetz 100, an das mehrere Automatisierungsgeräte 101, 102 und ein Funk-Kommunikationssystem angeschlossen sind. Das Funk-Kommunikationssystem umfasst im vorliegenden Ausführungsbeispiel zwei drahtgebunden mit dem Kommunikationsnetz 100 verbundene Funk-Basisstationen 201, 202 und zwei mit den Funk-Basisstationen 201, 202 verbindbare Funk-Teilnehmerstationen 203, 204.

Das Kommunikationsnetz 100 umfasst eine Vielzahl von Netzknoten, an denen Netzinfrastrukturgeräte vorgesehen sind. Die Netzinfrastrukturgeräte 200-202 können beispielsweise Switche, Router oder Firewalls sein und zum Anschluss von Automatisierungsgeräten 101, 102 dienen. Zu Automatisierungsgeräten zählen insbesondere speicherprogrammierbaren Steuerungen 101, Eingabe/Ausgabe-Einheiten (I/O-Module) oder Bedien- und Beobachtungsstationen 102 des industriellen Automatisierungssystems.

Speicherprogrammierbare Steuerungen 101 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung 101 beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung 101 und einem mit der speicherprogrammierbaren Steuerung 101 verbundenen Sensor bzw. einer gesteuerten Maschine oder Anlage 300. Ein Sensor bzw. eine Maschine oder Anlage 300 kann grundsätzlich auch über das Funk-Kommunikationssystem mit einer speicherprogrammierbaren Steuerung 101 verbunden werden. Die Zentraleinheit einer speicherprogrammierbaren Steuerung 101 ist insbesondere für eine Ermittlung geeigneter Steuerungsgrößen aus erfassten Messgrößen vorgesehen. Obige Komponenten einer speicherprogrammierbaren Steuerung 101 können beispielsweise über ein Rückwandbus-System miteinander verbunden werden.

Eine Bedien- und Beobachtungsstation 102 dient insbesondere zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 102 zur Anzeige von Werten eines Regelungskreises und zur Veränderung von Regelungsparametern verwendet. Bedien- und Beobachtungsstationen 102 umfassen zumindest eine graphische Benutzerschnittstelle, ein Eingabegerät, eine Prozessoreinheit und ein Kommunikationsmodul.

Sowohl die Funk-Basisstationen 201, 202 als auch die Funk-Teilnehmerstationen 203, 204 umfassen jeweils neben einem Array-Antennensystem 214, 224, 234, 244 eine Funk-Transceivereinheit 211, 221, 231, 241. Dabei weisen die Array-Antennensysteme 214, 224, 234, 244 jeweils eine hinsichtlich ihrer Richtung steuerbare Sende- bzw. Empfangscharakteristik 215, 225, 235, 245 auf. Vorzugsweise sind die Funk-Basisstationen 201, 202 und die Funk-Teilnehmerstationen 203, 204 zur Datenübermittlung entsprechend IEEE-Standard 802.11ad ausgestaltet und eingerichtet. Zur Steuerung der Sende- bzw. Empfangscharakteristik 215, 225, 235, 245 ihrer Array-Antennensysteme 214, 224, 234, 244 umfassen die Funk-Basisstationen 201, 202 und die Funk-Teilnehmerstationen 203, 204 jeweils eine Beamforming-Steuerungseinheit 212, 222, 232, 242.

Insbesondere sind die Funk-Basisstationen 201, 202 einerseits und die Funk-Teilnehmerstationen 203, 204 andererseits dafür ausgestaltet und eingerichtet, miteinander Datenrahmen 10, 20 auszutauschen, die über ein jeweils ausgewähltes Funk-Netz übertragen werden. Die Datenrahmen 10, 20 umfassen im vorliegenden Ausführungsbeispiel insbesondere Prozessdaten bzw. Mess- und Steuerungsgrößen, die mit den Funk-Teilnehmerstationen 203, 204 verbundenen Fahrzeugen bzw. Sensoren, Maschinen oder Anlagen 300 zugeordnet sind.

Zwischen den Funk-Basisstationen 201, 202 und den Funk-Teilnehmerstationen 203, 204 wird im vorliegenden Ausführungsbeispiel nur dann eine Funk-Verbindung aufgebaut, wenn eine Zuordnung zum selben Funk-Netz vorliegt. Beispielsweise sind eine erste Funk-Basisstation 201 und eine erste Funk-Teilnehmer-Station 203 einem ersten Funk-Netz zugeordnet, während eine zweite Funk-Basisstation 202 und eine zweite Funk-Teilnehmerstation 204 einem zweiten Funk-Netz zugeordnet sind. Vorzugsweise erfolgt ein Zugriff auf ein Funk-Netz durch eine Funk-Teilnehmerstation anhand einer dem Funk-Netz zugeordneten Netz-Kennung, z.B. SSID, und nach einer Autorisierung bei Vorliegen gültiger Netz-Zugangsinformationen, z.B. WPA-Schlüssel.

Darüber hinaus sind zumindest die Funk-Basisstationen 201, 202 jeweils dafür ausgestaltet und eingerichtet, zu vorgebbaren Zeitpunkten bzw. bei Eintritt vorgebbarer Ereignisse für von den Funk- Teilnehmerstationen 203, 204 empfangene Funk-Signale mittels der steuerbaren Richtung der Empfangscharakteristik 215, 225 ihres jeweiligen Antennensystems 214, 215 einen Empfangswinkel-Signalstärke-Verlauf zu ermitteln. Beide Funk-Basisstationen 201, 202 umfassen jeweils eine Auswerteeinheit 213, 223, um anhand des für ihre zugeordnete Funk-Teilnehmerstation 203, 204 ermittelten Empfangswinkel-Signalstärke-Verlaufs einen Richtungsvektor zur zugeordneten Funk-Teilnehmerstation 203, 204 zu ermitteln. Die Funk-Basisstationen 201, 202 leiten den Richtungsvektor zur zugeordneten Funk-Teilnehmerstation 203, 204 beispielsweise jeweils aus einem Maximum des für ihre zugeordnete Funk-Teilnehmerstation 203, 204 ermittelten Empfangswinkel-Signalstärke-Verlaufs ab. Entsprechend dem für die zugeordnete Funk-Teilnehmerstation 203, 204 ermittelten Richtungsvektor steuern die Funk-Basisstationen 201, 202 mittels ihrer Beamforming-Steuerungseinheit 212, 222 jeweils die Richtung der Sende- bzw. Empfangscharakteristik 215, 225 ihres Array-Antennensystems 214, 224.

Zusätzlich ermitteln die Funk-Basisstationen 201, 202 jeweils anhand einer ermittelten Stärke der von ihrer zugeordneten Funk-Teilnehmerstation 203, 204 empfangenen Funk-Signale bzw. anhand einer Signallaufzeitmessung einen Abstand zur zugeordneten Funk-Teilnehmerstation 203, 204 und steuern ihre jeweilige Sendeleistung entsprechend dem für die zugeordnete Funk-Teilnehmerstation 203, 204 ermittelten Abstand. Somit sind die Sende- bzw. Empfangscharakteristiken 215, 225 der Array-Antennensysteme 214, 224 der Funk-Basisstationen 201, 202 sowohl hinsichtlich ihrer Richtung als auch hinsichtlich ihrer Reichweite steuerbar.

Im vorliegenden Ausführungsbeispiel kann ausgenutzt werden, dass die Funk-Basisstationen 201, 202 ortsfest angeordnet sind bzw. eine bekannte Position aufweisen, während lediglich die Funk-Teilnehmerstationen 203, 204 mobil sind bzw. eine nicht genau bekannte Position aufweisen. In diesem Fall ermitteln die Funk-Basisstationen 201, 202 entsprechend vorangehenden Ausführung anhand von Richtung und Abstand fortlaufend die Position ihrer zugeordneten Funk-Teilnehmerstation 203, 204. Anhand der Position der jeweiligen Funk-Basisstation 201, 202 und der Position der zugeordneten Funk-Teilnehmerstation 203, 204 wird ein Richtungsvektor von der jeweiligen Funk-Teilnehmerstation 203, 204 zur zugeordneten Funk-Basisstation 201, 202 ermittelt, entsprechend dem die jeweilige Funk-Teilnehmerstation 203, 204 mittels ihrer Beamforming-Steuerungseinheit 232, 242 jeweils die Richtung der Sende- bzw. Empfangscharakteristik 235, 245 ihres Array-Antennensystems 234, 244 steuert.

Eine Ermittlung des Richtungsvektors von der jeweiligen Funk-Teilnehmerstation 203, 204 zur zugeordneten Funk-Basisstation 201, 202 kann entweder in den Funk-Basisstationen 201, 202 oder in den Funk-Teilnehmerstationen 203, 204. Dementsprechend übermitteln die Funk-Basisstationen 201, 202 jeweils eine Information über ihre eigene Position sowie über die Position der zugeordneten Funk-Teilnehmerstation 203, 204 oder eine Information über den jeweiligen Richtungsvektor an ihre zugeordnete Funk-Teilnehmerstation 203, 204.

Entsprechend einer alternativen Ausgestaltungsvariante ermitteln die Funk-Teilnehmerstationen 203, 204 jeweils zu vorgebbaren Zeitpunkten bzw. bei Eintritt vorgebbarer Ereignisse für von der zugeordneten Funk-Basisstation 201, 202 empfangene Funk-Signale mittels der steuerbaren Richtung der Empfangscharakteristik 235, 245 ihres Array-Antennensystems 234, 244 einen Empfangswinkel-Signalstärke-Verlauf. Analog zu vorangehenden Ausführungen umfassen beide Funk-Teilnehmerstationen 203, 204 jeweils eine Auswerteeinheit 233, 243, um anhand des für ihre zugeordnete Funk-Basisstation 201, 202 ermittelten Empfangswinkel-Signalstärke-Verlaufs einen Richtungsvektor zur zugeordneten Funk-Basisstation 201, 202 zu ermitteln.

Die Funk-Teilnehmerstationen 203, 204 leiten den Richtungsvektor zur zugeordneten Funk-Basisstation 201, 202 vorzugsweise jeweils aus einem Maximum des für ihre zugeordnete Funk-Basisstation 201, 202 ermittelten Empfangswinkel-Signalstärke-Verlaufs ab. Entsprechend dem für die zugeordnete Funk-Basisstation 201, 202 ermittelten Richtungsvektor steuern die Funk-Teilnehmerstationen 203, 204 mittels ihrer Beamforming-Steuerungseinheit 232, 242 jeweils die Richtung der Sende- bzw. Empfangscharakteristik 235, 245 ihres Array-Antennensystems 234, 244. Vorteilhafterweise ermitteln die Funk-Teilnehmerstationen 203, 204 entsprechend der alternativen Ausgestaltungsvariante jeweils anhand einer ermittelten Stärke der von ihrer zugeordneten Funk-Basisstation 201, 202 empfangenen Funk-Signale bzw. anhand einer Signallaufzeitmessung einen Abstand zur zugeordneten Funk-Basisstation 201, 202 und steuern ihre jeweilige Sendeleistung entsprechend dem für die zugeordnete Funk-Basisstation 201, 202 ermittelten Abstand.

Vorzugsweise wird eine Datenübermittlung zwischen den Funk-Basisstationen 201, 202 und den Funk-Teilnehmerstationen203, 204 eingestellt, wenn ein Absolutwert des für die jeweilige Funk-Basisstation bzw. Funk-Teilnehmerstation ermittelten Empfangswinkel-Signalstärke-Verlaufs unter einen vorgebbaren Schwellwert fällt. Auch für die Richtungsvektoren kann ein zulässiger Winkelbereich vorgegeben werden, außerhalb dessen die Datenübermittlung eingestellt wird. Damit kann beispielsweise bei einer drahtlosen Datenkommunikation zwischen Zug-Waggons erreicht werden, dass nur Zug-Waggons innerhalb des selben Gleises miteinander kommunizieren können und keine unbeabsichtigte Datenkommunikation mit Zug-Waggons in einem benachbarten Gleis zustande kommt. Insbesondere ist für eine Realisierung zulässiger Kommunikationsbeziehungen nicht erforderlich, dass geänderte Netz-Kennungen oder Netz-Zugangsinformationen verwendet werden, da eine Teilnehmerkopplung bzw. -separierung auf Basis räumlicher Randbedingungen erfolgt. Somit können Konfigurationsinformationen, wie Netz-Kennungen oder Netz-Zugangsinformationen, grundsätzlich beibehalten werden. Auch bei einer Bedienung von sicherheitskritischen Maschinen mittels mobiler Bediengeräte kann eine Teilnehmerkopplung bzw. -separierung auf Basis räumlicher Randbedingungen vorteilhaft genutzt werden. Beispielsweise kann damit erreicht werden, dass eine Datenkommunikation nur dann zustande kommt, wenn ein mobiles Bediengerät in Richtung einer zu bedienenden Maschine zeigt bzw. sich innerhalb eines zulässigen Abstands von dieser befindet.

Grundsätzlich kann eine Ortung der Funk-Teilnehmerstationen durch die Funk-Basisstationen bzw. eine Ortung der Funk-Basisstationen durch die Funk-Teilnehmerstationen zusätzlich oder alternativ zur Ortung, die auf einem Empfangswinkel-Signalstärke-Verlauf basiert, mittels eines Ultra-Weitband-Ortungssystems erfolgen.

## Patentansprüche

1. Verfahren zum Betrieb eines Funk-Kommunikationssystems für ein industrielles Automatisierungssystem, bei dem
- das Funk-Kommunikationssystem zumindest ein erstes (201, 202) und ein zweites als Funk-Basisstation und/oder als Funk-Teilnehmerstation betreibbares Funk-Kommunikationsgerät (203, 204) umfasst, die jeweils zumindest eine Funk-Transceivereinheit (211, 221, 231, 241) und ein dieser zugeordnetes Antennensystem (214, 224, 234, 244) umfassen,
- zumindest das Antennensystem des ersten Funk-Kommunikationsgeräts eine hinsichtlich ihrer Richtung steuerbare Sende- und/oder Empfangscharakteristik (215, 225, 235, 245) aufweist,
- zumindest das erste Funk-Kommunikationsgerät (201, 202) zu vorgebbaren Zeitpunkten und/oder bei Eintritt vorgebbarer Ereignisse für vom zweiten Funk-Kommunikationsgerät (203, 204) empfangene Funk-Signale mittels der steuerbaren Richtung der Empfangscharakteristik seines Antennensystems einen Empfangswinkel-Signalstärke-Verlauf ermittelt,
- das erste Funk-Kommunikationsgerät (201, 202) anhand des für das zweite Funk-Kommunikationsgerät (203, 204) ermittelten Empfangswinkel-Signalstärke-Verlaufs einen Richtungsvektor zum zweiten Funk-Kommunikationsgerät ermittelt,
- das erste Funk-Kommunikationsgerät (201, 202) die Richtung der Sende- und/oder Empfangscharakteristik (215, 225) seines Antennensystems (214, 224) entsprechend dem für das zweite Funk-Kommunikationsgerät (203, 204) ermittelten Richtungsvektor steuert.

2. Verfahren nach Anspruch 1,
bei dem das erste Funk-Kommunikationsgerät anhand einer ermittelten Stärke der vom zweiten Funk-Kommunikationsgerät empfangenen Funk-Signale und/oder anhand einer Signallaufzeitmessung einen Abstand zum zweiten Funk-Kommunikationsgerät ermittelt und bei dem das erste Funk-Kommunikationsgerät seine Sendeleistung entsprechend dem für das zweite Funk-Kommunikationsgerät ermittelten Abstand steuert.

3. Verfahren nach einem der Ansprüche 1 oder 2,
bei dem das erste Funk-Kommunikationsgerät den Richtungsvektor zum zweiten Funk-Kommunikationsgerät aus einem Maximum des für das zweite Funk-Kommunikationsgerät ermittelten Empfangswinkel-Signalstärke-Verlaufs ableitet.

4. Verfahren nach einem der Ansprüche 1 bis 3,
bei dem das Antennensystem des zweiten Funk-Kommunikationsgeräts eine hinsichtlich ihrer Richtung steuerbare Sende- und/oder Empfangscharakteristik aufweist, bei dem das zweite Funk-Kommunikationsgerät zu vorgebbaren Zeitpunkten und/oder bei Eintritt vorgebbarer Ereignisse für vom ersten Funk-Kommunikationsgerät empfangene Funk-Signale mittels der steuerbaren Richtung der Empfangscharakteristik seines Antennensystems einen Empfangswinkel-Signalstärke-Verlauf ermittelt, bei dem das zweite Funk-Kommunikationsgerät anhand des für das erste Funk-Kommunikationsgerät ermittelten Empfangswinkel-Signalstärke-Verlaufs einen Richtungsvektor zum ersten Funk-Kommunikationsgerät ermittelt und bei dem das zweite Funk-Kommunikationsgerät die Richtung der Sende- und/oder Empfangscharakteristik seines Antennensystems entsprechend dem für das erste Funk-Kommunikationsgerät ermittelten Richtungsvektor steuert.

5. Verfahren nach Anspruch 4,
bei dem das zweite Funk-Kommunikationsgerät anhand einer ermittelten Stärke der vom ersten Funk-Kommunikationsgerät empfangenen Funk-Signale und/oder anhand einer Signallaufzeitmessung einen Abstand zum ersten Funk-Kommunikationsgerät ermittelt und bei dem das zweite Funk-Kommunikationsgerät seine Sendeleistung entsprechend dem für das erste Funk-Kommunikationsgerät ermittelten Abstand steuert.

6. Verfahren nach einem der Ansprüche 4 oder 5,
bei dem das zweite Funk-Kommunikationsgerät den Richtungsvektor zum ersten Funk-Kommunikationsgerät aus einem Maximum des für das erste Funk-Kommunikationsgerät ermittelten Empfangswinkel-Signalstärke-Verlaufs ableitet.

7. Verfahren nach einem der Ansprüche 1 bis 6,
bei dem das erste Funk-Kommunikationsgerät als Funk-Basisstation an einer konstanten Position betrieben wird, bei dem das zweite Funk-Kommunikationsgerät als Funk-Teilnehmerstation an einer veränderbaren Position betrieben wird, bei dem das erste Funk-Kommunikationsgerät fortlaufend die Position des zweiten Funk-Kommunikationsgeräts ermittelt, bei dem anhand der Position des ersten Funk-Kommunikationsgeräts und der Position des zweiten Funk-Kommunikationsgeräts ein Richtungsvektor vom zweiten Funk-Kommunikationsgerät zum ersten Funk-Kommunikationsgerät ermittelt wird, entsprechend dem das zweite Funk-Kommunikationsgerät die Richtung der Sende- und/oder Empfangscharakteristik seines Antennensystems steuert.

8. Verfahren nach Anspruch 7,
bei dem das erste Funk-Kommunikationsgerät eine Information über seine eigene Position sowie über die Position des zweiten Funk-Kommunikationsgeräts an das zweite Funk-Kommunikationsgerät übermittelt oder bei dem das erste Funk-Kommunikationsgerät eine Information über den Richtungsvektor vom zweiten Funk-Kommunikationsgerät zum ersten Funk-Kommunikationsgerät an das zweite Funk-Kommunikationsgerät übermittelt.

9. Verfahren nach einem der Ansprüche 1 bis 8,
bei dem eine Datenübermittlung zwischen dem ersten Funk-Kommunikationsgerät und dem zweiten Funk-Kommunikationsgerät eingestellt wird, wenn ein Absolutwert des für das erste und/oder zweite Funk-Kommunikationsgerät ermittelten Empfangswinkel-Signalstärke-Verlaufs unter einen vorgebbaren Schwellwert fällt, und/oder bei dem eine Datenübermittlung zwischen dem ersten Funk-Kommunikationsgerät und dem zweiten Funk-Kommunikationsgerät eingestellt wird, wenn der jeweilige Richtungsvektor außerhalb eines vorgegeben Winkelbereichs liegt.

10. Verfahren nach einem der Ansprüche 1 bis 9,
bei dem eine Datenübermittlung zwischen dem ersten Funk-Kommunikationsgerät und dem zweiten Funk-Kommunikationsgerät entsprechend IEEE-Standard 802.11ad erfolgt.

11. Verfahren nach einem der Ansprüche 1 bis 10,
bei dem eine Ortung des zweiten Funk-Kommunikationsgeräts durch das erste Funk-Kommunikationsgerät und/oder eine Ortung des ersten Funk-Kommunikationsgeräts durch das zweite Funk-Kommunikationsgerät zusätzlich oder alternativ zur Ortung, die auf einem Empfangswinkel-Signalstärke-Verlauf basiert, mittels eines Ultra-Weitband-Ortungssystems erfolgen/erfolgt.

12. Verfahren nach einem der Ansprüche 1 bis 10,
bei dem nur dann eine Funk-Verbindung zwischen dem ersten Funk-Kommunikationsgerät und dem zweiten Funk-Kommunikationsgerät aufgebaut wird, wenn beide Funk-Kommunikationsgeräte demselben Funk-Netz zugeordnet sind.

13. Verfahren nach Anspruch 12,
bei dem ein Zugriff auf ein Funk-Netz durch eine Funk-Teilnehmerstation anhand einer dem Funk-Netz zugeordneten Netz-Kennung und nach einer Autorisierung bei Vorliegen gültiger Netz-Zugangsinformationen erfolgt.

14. Funk-Kommunikationsgerät, insbesondere zur Durchführung eines Verfahrens nach einem der Ansprüche 1 bis 13, mit
- zumindest einer Funk-Transceivereinheit (211, 221, 231, 241) und einem dieser zugeordneten Antennensystem (214, 224, 234, 244), wobei das Antennensystem eine hinsichtlich ihrer Richtung steuerbare Sende- und/oder Empfangscharakteristik (215, 225, 235, 245) aufweist,
- wobei das Funk-Kommunikationsgerät (201, 202) dafür ausgestaltet und eingerichtet ist, zu vorgebbaren Zeitpunkten und/oder bei Eintritt vorgebbarer Ereignisse für von einem weiteren Funk-Kommunikationsgerät (203, 204) empfangene Funk-Signale mittels der steuerbaren Richtung der Empfangscharakteristik seines Antennensystems einen Empfangswinkel-Signalstärke-Verlauf zu ermitteln,
- wobei das Funk-Kommunikationsgerät (201, 202) dafür ausgestaltet und eingerichtet ist, anhand des für das weitere Funk-Kommunikationsgerät (203, 204) ermittelten Empfangswinkel-Signalstärke-Verlaufs einen Richtungsvektor zum weiteren Funk-Kommunikationsgerät zu ermitteln,
- wobei das Funk-Kommunikationsgerät (201, 202) dafür ausgestaltet und eingerichtet ist, die Richtung der Sende- und/oder Empfangscharakteristik (215, 225) seines Antennensystems (214, 224) entsprechend dem für das weitere Funk-Kommunikationsgerät (203, 204) ermittelten Richtungsvektor zu steuern.

15. Funk-Kommunikationsgerät nach Anspruch 14,
bei dem das Funk-Kommunikationsgerät dafür ausgestaltet und eingerichtet ist, anhand einer ermittelten Stärke der vom weiteren Funk-Kommunikationsgerät empfangenen Funk-Signale und/oder anhand einer Signallaufzeitmessung einen Abstand zum weiteren Funk-Kommunikationsgerät zu ermitteln und seine Sendeleistung entsprechend dem für das weitere Funk-Kommunikationsgerät ermittelten Abstand zu steuern.

16. Funk-Kommunikationsgerät nach einem der Ansprüche 14 oder 15,
bei dem das Funk-Kommunikationsgerät dafür ausgestaltet und eingerichtet ist, den Richtungsvektor zum weiteren Funk-Kommunikationsgerät aus einem Maximum des für das weitere Funk-Kommunikationsgerät ermittelten Empfangswinkel-Signalstärke-Verlaufs abzuleiten.
